# EUROPEAN PATENT APPLICATION

(11) **EP 2 005 866 A1**
(43) Date of publication of application: **24.12.2008**
(21) Application number: 07012166.0
(22) Date of filing: 21.06.2007
(51) Int. Cl.: A47J 37/06, A21B 1/00, F24C 7/00

(54) **Method for cooking a dish**

(71) Applicant: Electrolux Home Products Corporation N.V., 1930 Zaventem (BE)
(72) Inventor: Turek, Richard, 90765 Fürth (DE)
(74) Representative: Hochmuth, Jürgen

(57) **Abstract**

The invention relates to a method for cooking a dish in a cooking device (1), especially in a domestic cooking appliance, wherein the dish is placed in a cooking cavity (2) and is exposed to heat from at least one heating element (3, 4, 5). To reduce the energy consumption of the cooking process, the invention suggests that heat is conducted to the dish from a grilling element (3), from a bottom heat element (4) and from a hot air heating element (5) simultaneously.

## Description

The invention relates to a method for cooking a dish in a cooking device, especially in a domestic cooking appliance, wherein the dish is placed in a cooking cavity and is exposed to heat from at least one heating element.

It is well known in the art to cook a dish especially in a domestic cooking appliance by using different types of heat which is conducted to the dish which is positioned in a cooking cavity of the cooking device.

Special conditions apply when a convenience food it to be cooked in a domestic cooking device. Usually, convenience food is pre-cooked to such an extent that in most of the cases only a short remaining cooking time is necessary. Thus, it is common to pre-heat the cooking device before placing the dish in the cavity so that the dish can be finally cooked. Only by doing so it can be made sure that a defined amount of heat is exposed to the dish which has such a quantity and intensity that the dish gets the right amount of heat energy to come up with an optimized cooking result.

It is detrimental that time as well as energy is wasted by this method of preparing a convenience food.

Furthermore, the cooking result is sometimes poor due to the fact that it is complicated to expose the dish to optimized heating conditions. When using hot air heating elements, upper or lower heating elements the upper or bottom side of the dish is seldom cooked perfectly because the heat distribution is not optimal for finally cooking convenience food.

Another problem is that some kinds of convenience food have to be turned-over several times to reach a good cooking result. E. g. this applies especially for French fries; this dish has to be turned-over permanently to obtain a homogeneous degree of browning and to make them crispy.

The turning-over of the dish has a high potential of danger with respect to the handling of the dish in the hot environment.

Therefore, it is an object of the invention to improve a cooking method of the kind mentioned above so that perfect cooking results are obtained. Furthermore, the cooking process should need less time and energy, especially when cooking convenience food. Finally, the demand for handling - especially in the hot environment - should be minimized so that no danger exists for burning.

The solution of this object according to the invention is characterized in that heat is conducted to the dish from a grilling element and from a bottom heat element and preferably in addition from a hot air fan and/or hot air heating element simultaneously.

The invention thus combines the heat of the two mentioned heating elements and preferably also the hot air fan or heating element to achieve an optimized cooking result. It becomes possible to reduce the heating up time of the cooking device and to save energy. In spite of this good cooking results are achieved and the dish is heated up in a homogeneous way.

Preferably, the method is applied for cooking convenience food.

The suggested method is successfully employed for cooking a pizza or French fries.

Another preferred application is the cooking of a cheese cake.

The invention combines existing heating elements in a beneficial manner to obtain an optimized combination of heat introduction especially when cooking convenience food.

The high power of the heating elements enables that the cooking process can be carried out without a pre-heating of the cavity. In spite of this the cooking time has no to be extended. To the contrary a reduction of the cooking time between 20 % and 40 % compared with the conventional method can be achieved. The operation mode of the method is simple and energy can be saved.

By using the grilling element and the bottom heat element an optimal distribution of radiation heat is given, at the top side as well as at the bottom side of the dish. Consequently, no turning-over of the dish is necessary. This is especially beneficially when a potato dish has to be cooked (e. g. French fries).

An optimized browning of the dish, especially of a pizza, can be reached without problems.

The danger to get burned is minimized due to the fact that the demand of handling is minimized. So, a comfortable working mode is ensured for the operator of the cooking appliance.

Due to the fact that no turning-over of the dish is necessary it becomes possible to automate the cooking process.

Also, conventional dishes, which require an intensive heat from the top and from the bottom, can be cooked in an improved manner by using the method according to the invention, e. g. pizza and cheese cake.

In the drawings an embodiment of the invention is depicted.
- FIG 1: shows schematically a perspective view of a domestic cooking appliance and
- FIG 2: shows the cross section through the cooking appliance according to FIG 1 in a schematic view.

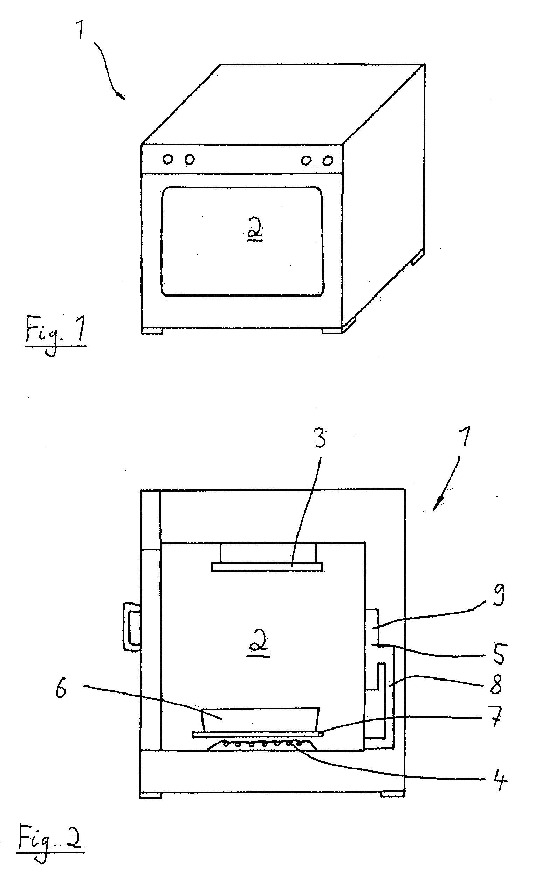

In FIG 1 a domestic cooking device 1 is shown which is known as such. The device 1 has a cooking cavity 2, in which a dish to be cooked can be inserted.

In FIG 2 a dish 6 is placed on a carrier 7 inside the cavity 2.

As can be seen in FIG 2 the cooking device 1 is equipped with three different heating elements.

The first heating element is a grilling element 3 which is mounted in the top region of the cavity 2 and used for grilling. Consequently, when the grilling element 3 is switched on heat comes from the top of the cavity down to the dish 6.

The second heating element is a bottom heat element 4 which is positioned in the bottom region of the cavity 2. The bottom heat element 4 delivers heat from the bottom side of the cavity to the dish 6.

The third heating element is a hot air heating element 5. It has a conduit system 8 and a fan 9 for sucking air from the cavity into the conduit system 8 and blowing it into the cavity 2 again by the fan 9. During the passage of the conduit system 8 the air is heated up by electrical heating element(s) (not shown), usually a ring-shaped heating element surrounding the fan 9.

According to the invention all three heating elements 3, 4 and 5 are operated simultaneously. The effect is that the heat is inserted into the dish in a quite homogeneous way and from basically all sides by radiation, thermal conduction and by the hot air.

So, a homogeneous degree of browning is ensured as well as a cooking process from all sides. Consequently, a turning-over of the dish is not necessary. This applies especially when a dish has to be cooked which normally needs a permanent turning-over, as it is the case especially for cooking French fries. When using the suggested method according to the invention also this type of food is browned homogeneously so that a good cooking result is obtained.

### Reference Numerals

- 1: Cooking device
(Domestic cooking appliance)
- 2: Cooking cavity
- 3, 4, 5: Heating element
- 3: Grilling element
- 4: Bottom heat element
- 5: Hot air heating element
- 6: Dish
- 7: Carrier
- 8: Conduit system
- 9: Fan

## Claims

1. Method for cooking a dish in a cooking device (1), especially in a domestic cooking appliance, wherein the dish is placed in a cooking cavity (2) and is exposed to heat from at least one heating element (3, 4, 5),
**characterized in that**
heat is conducted to the dish from a grilling element (3) and from a bottom heat element (4) and preferably also from a hot air fan and/or a hot air heating element (5) simultaneously.

2. Method according to claim 1, **characterized in that** the dish is convenience food.

3. Method according to claim 1, **characterized in that** the dish is a pizza.

4. Method according to claim 1, **characterized in that** the dish are French fries.

5. Method according to claim 1, **characterized in that** the dish is a cheese cake.

6. Method according to any of the preceding claims, wherein heat is conducted to the dish also by air convection or circulation within the cooking cavity by means of at least one fan (9).

7. Method according to claim 6, wherein the air circulated by the fan is heated by at least one heating element arranged close to or surrounding the fan (9).
